# EUROPEAN PATENT APPLICATION

(11) **EP 1 947 139 A1**
(43) Date of publication of application: **23.07.2008**
(21) Application number: 06798205.8
(22) Date of filing: 21.09.2006
(51) Int. Cl.: C08J 9/04, B29C 55/06, B29C 55/28, B29C 61/06, B32B 5/18, B65D 25/20, B29K 105/04, B29L 7/00

(54) **FOAMED FILM FOR SHRINK LABELS**

(30) Priority: 22.09.2005 JP 2005275476
(71) Applicant: Nissei Industrial Co., Ltd., Kagawa 769-2520 (JP)
(72) Inventor: TANAKA, Ryouji, Higashikagawa-shi, Kagawa 769-2520 (JP); TAKA, Toshio, Tokyo 141-0022 (JP)
(74) Representative: Troesch Scheidegger Werner AG
(86) International application number: PCT/JP2006/318764
(87) International publication number: WO 2007/034884

(57) **Abstract**

The present invention provides a foamed film for shrink labels which is capable of being accommodated by the new continuous attachment system for shrink labels, and in which a long foamed film for shrink labels is wound around the body of a container, and is cut at the inner-position where the film overlaps, after which the two ends of the resulting film unit are joined together to form a cylindrical shape, and this is subsequently heated to cause heat shrinkage of the film and to produce the label. The foamed film for shrink labels of the present invention is a film which stretches a blown film with an expansion ratio of 1.3 to 5 in the longitudinal direction (vertical direction or extrusion direction) so that the draw ratio is 1.5 to 4.0, which has properties such as a thickness of 120 to 300 µm, a tensile elastic modulus of 80 to 500 MPa, a static friction coefficient of 0.3 to 0.8, a coefficient of shrinkage of 15% or more at 90°C and 30% or more at 120°C, and which is foamed and has shrinkability.

## Description

### TECHNICAL FIELD

The present invention relates to foamed film for shrink labels suitable for use as foamed shrink labels affixed to the body of containers such as glass bottles, PET bottles, aluminum cans, steel cans and aluminum bottles, its manufacturing method, foamed shrink labels obtained from the foamed film for shrink labels, and containers to which the foamed shrink labels are affixed.

Priority is claimed on Japanese Patent Application No. 2005-275476 filed September 22, 2005, the content of which is incorporated herein by reference.

### BACKGROUND ART

With respect to foamed film for shrink labels of this type, there is the disclosure of Japanese Unexamined Patent Application, First Publication No. S62-158729. This film is composed of ethylene-propylene copolymer, and it is heat-shrinkable foamed film with an expansion ratio of 3 or less and a draw ratio of 3 to 5.

Moreover, in Japanese Unexamined Patent Application, First Publication No. 2004-298605, a heat-shrinkable foam sheet is disclosed which is primarily composed of styrene resin, and which has a volume percentage of open cell and of closed cell of 20% or more and a draw ratio of 1.5 to 8.

Incidentally, as a method for affixing such foamed shrink labels to container bodies, a method has recently been proposed where a long foamed film for shrink labels is wound around the body of a container, and is cut at the inner-position where the film overlaps, after which the two ends of the resulting film unit are joined together to form a cylindrical shape, and this is heated to cause the film to undergo heat shrinkage and to produce the label. Moreover, an automated apparatus has been developed which automatically performs this series of continuous attachment operations.

This new continuous attachment system for shrink labels has the advantage that labeling speed is extremely rapid, and opportunities for introducing it into industry are increasing.

However, there is the problem that the conventional foamed film for shrink labels described above is incompatible with this new continuous attachment system for shrink labels.

The conventional foamed film for shrink labels was conceived to be accommodated by an old attachment system where a cylindrical label is formed in advance, this cylindrical label is fitted so as to drop down from the top of the container, and is shrunk by heating, for based on these points, film with a comparatively high elastic modulus could be used, and stretched in the transverse direction (width direction) of the film of the roll state.
Patent Document 1: Japanese Unexamined Patent Application, First Publication No. S62-158729
Patent Document 2: Japanese Unexamined Patent Application, First Publication No. 2004-298605

### DISCLOSURE OF INVENTION

### PROBLEM THAT THE INVENTION IS TO SOLVE

Consequently, the task of the present invention is to obtain foamed film for shrink labels which can be accommodated by the above-described new continuous attachment system for shrink labels.

### MEANS FOR SOLVING THE PROBLEM

In order to solve the pertinent problem,
(1) The present invention under its first aspect is a foamed film for shrink labels produced by stretching in the longitudinal direction; having a tensile elastic modulus of 80 to 500 MPa, and a static friction coefficient of 0.3 to 0.8.
(2) The present invention under its second aspect is the foamed film for shrink labels according to (1) above, further having a thickness of 80 to 300 µm, and a coefficient of shrinkage of 15% or more at 90°C and 30% or more at 120°C.
(3) The present invention under its third aspect is the foamed film for shrink labels according to (2) above, comprising a resin composition comprising:
   from 30 to 80% by weight of α-olefin propylene copolymer which has a melting point of 130 to 170°C, an Izod impact strength of 50 to 100 kgf·cm/cm at -30°C, a flexural modulus
   of 60 to 300 MPa, and a melt flow rate of 0.5 to 50 g/10 minutes; and
   from 70 to 20% by weight of polypropylene which has long chain branching.
(4) The present invention under its fourth aspect is a foamed film for shrink labels according to any of the aforementioned (1) to (3), wherein a surface smoothness of, at least, a surface layer is 5 µm or less.
(5) The present invention under its fifth aspect is a laminated foamed film for shrink labels produced by laminating non-foamed film on at least one face of the foamed film for shrink labels according to any of the aforementioned (1) to (3).
(6) The present invention under its sixth aspect is a method of preparing a foamed film for shrink labels, wherein a blown film with a thickness of 180 to 800 µm and an expansion ratio of 1.3 to 5 is stretched by the single-axis longitudinal stretch method, in which the space between two rolls is so narrow that the film is stretched in a short interval, to become a draw ratio of 1.5 to 4.0 at 100 to 125°C.
(7) The present invention under its seventh aspect is a method of preparing a foamed film for shrink labels, wherein a blown film, which has a thickness of 180 to 800 µm and an expansion ratio of 1.3 to 5.0 and at least one face of which is laminated with non-foamed film, is stretched by the single-axis longitudinal stretch method, in which the space between two rolls is so narrow that the film is stretched in a short interval, so that a draw ratio is 1.5 to 4.0 at 100 to 125°C, and wherein a surface smoothness of the one face is 5 µm or less.
(8) The present invention under its eighth aspect is a method of preparing a foamed film for shrink labels, wherein a base film, which has a thickness of 180 to 800 µm and an expansion ratio of 1.3 to 5.0 and at least one face of which has a surface smoothness of 5 µm or less, is stretched by the single-axis longitudinal stretch method, in which the space between two rolls is so narrow that the film is stretched in a short interval, so that a draw ratio is 1.5 to 4.0 at 100-125°C, and wherein a surface smoothness of the surface layer is 5 µm or less.
(9) The present invention under its ninth aspect is a method of preparing of foamed film for shrink labels according to (8) above, wherein the base film is a blown film in which a high-temperature foamed tubular bubble continuously extruded from a die is made to contact an internal mandrel.
(10) The present invention under its tenth aspect is a foamed shrink label produced by winding the foamed film for shrink labels according to any of the aforementioned (1) to (3) around a container, and heating it.
(11) The present invention under its eleventh aspect is a foamed shrink label produced by winding the foamed film for shrink labels according to the aforementioned (4) around a container, and heating it.
(12) The present invention under its twelfth aspect is a foamed shrink label produced by winding the laminated foamed film for shrink labels according to the aforementioned (5) around a container, and heating it.
(13) The present invention under its thirteenth aspect is a labeled container to which a foamed shrink label is affixed by winding the foamed film for shrink labels according to any of the aforementioned (1) to (3) around a container, and heating it.
(14) The present invention under its fourteenth aspect is a labeled container to which a foamed shrink label is affixed by winding the foamed film for shrink labels according to the aforementioned (4) around a container, and heating it.
(15) The present invention under its fifteenth aspect is a labeled container to which a foamed shrink label is affixed by winding the laminated foamed film for shrink labels according to the aforementioned (5) around a container, and heating it.

### EFFECTS OF INVENTION

As the foamed film for shrink labels of the present invention has an elastic modulus of 80 to 500 MPa, it can be easily bent, and can be simply wound around the body of a container.

Moreover, as it has a static friction coefficient of 0.3 to 0.8, suitable friction occurs vis-à-vis the container, and this also serves to achieve satisfactory winding of the film around the container body. As a result, it can be well accommodated by the above-described new continuous attachment system for shrink labels.

With respect to the resin composition constituting the film, a resin composition is used which comprises from 30 to 80% by weight of α-olefin propylene copolymer having a melting point of 130 to 170°C, an Izod impact strength of 50 to 100 kgf·cm /cm at -30°C, a flexural modulus of 60 to 300 MPa and a melt flow rate of 0.5 to 50 g/10 minutes, and from 70 to 20% by weight of polypropylene having long chain branching, with the result that the heat resistance of the film is satisfactory, and retort treatment after attachment of the shrink label to the container is also possible.

Furthermore, as a result of a surface smoothness of 5 µm or less, preferably 3 µm or less, and still more preferably 1.5 µm or less, a foamed shrink label with enhanced printing effects and excellent appearance is obtained.

Moreover, as it has a thickness of 80 to 300 µm and a coefficient of shrinkage of 15% or more at 90°C and 30% or more at 120°C, and as it uniformly attaches even to containers of complex external shape, there is no need to select container shape.

### BRIEF DESCRIPTION OF DRAWINGS

Fig. 1 is a schematic sectional view which shows an example of the foamed film for shrink labels of the present invention.
Fig. 2 is a schematic sectional view which shows an example of the foamed film for shrink labels of the present invention which has good surface smoothness.
Fig. 3 is a schematic sectional view which shows an example of the laminated film for foamed shrink labels of the present invention.
Fig. 4 is a schematic sectional view which shows an example of a container to which the foamed film for shrink labels of the present invention is affixed.

The reference numerals shown in these figures are defines as follows:
1, foamed film for shrink labels;
2, non-foamed film;
3, smooth part;
4, foamed part;
11, container;
12, foamed shrink label.

### BEST MODE FOR CARRYING OUT THE INVENTION

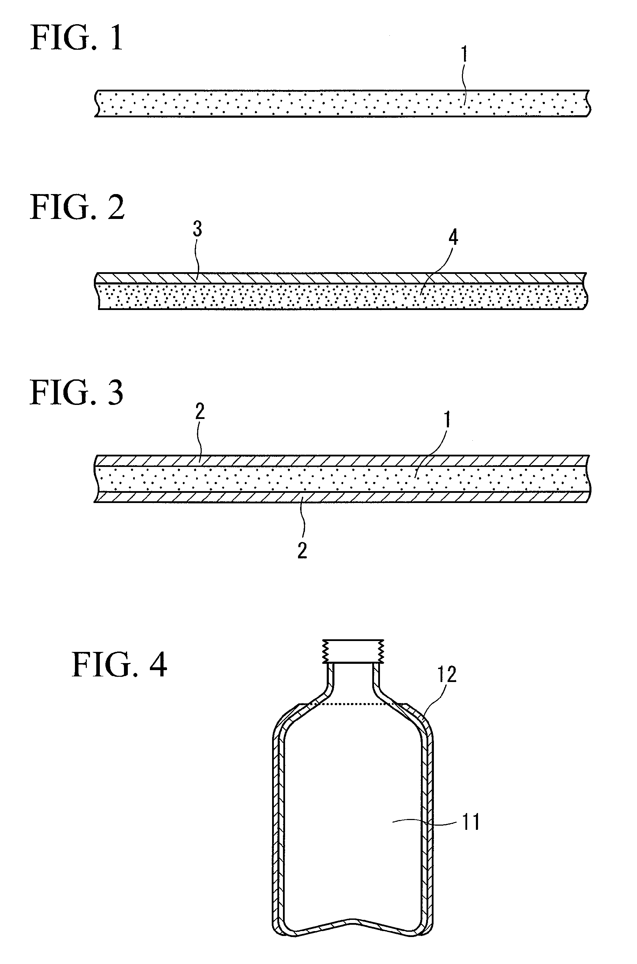

Fig. 1 shows an example of the foamed film for shrink labels of the present invention.

A foamed film for shrink labels 1 of this example is a film which stretches a blown film with an expansion ratio of 1.3 to 5 to a draw ratio of 1.5 to 4.0 in the longitudinal direction (vertical direction or extrusion direction), which has properties such as a thickness of 80 to 300 µm, preferably 120 to 300 µm, and still more preferably 150 to 200 µm, a tensile elastic modulus of 80 to 500 MPa, a static friction coefficient of 0.3 to 0.8 and preferably 0.3 to 0.6, a coefficient of shrinkage of 15% or more at 90°C and 30% or more at 120°C, and which is foamed and has shrinkability.

At a thickness of less than 80 µm, heat retention and heat insulation effects are insufficient when a high-temperature beverage is put into the container, while at more than 300 µm, the container is bulky, external appearance is poor, and handling is difficult.

At a tensile elastic modulus of less than 80 MPa, creases tend to occur in the foamed film, and when 500 MPa is exceeded, winding in high-speed labeling operations becomes difficult.

The static friction coefficient of the present invention is a value which is measured based on JIS K-7215. At less than 0.3, winding around the container is poor due to the slide properties of the film, and when 0.8 is exceeded, sliding is poor, and troubles occur in the winding process.

When the expansion ratio of the blown film prior to stretching is less than 1.3, heat insulation effects are insufficient, and when it exceeds 5, external appearance is poor.

When the coefficient of shrinkage is less than 15% at 90°C, the external appearance of the product after shrinkage is poor, and when the coefficient of shrinkage is less than 30% at 120°C, adequate adaptation to the shape of the container would not be possible.

The expansion ratio of this foamed film for shrink labels has been set at 1.1 to 5.0, and preferably 1.3 to 3.5. When the expansion ratio is less than 1.1, heat insulation properties are insufficient, and when it exceeds 5.0, bulkiness occurs, and external appearance is poor.

There are no particular limitations on the base polymer constituting this film 1 so long as thermoplastic resins are used. Among these, polyolefin resins are preferable from the standpoint of the required elastic modulus, and among these, polypropylene resins are suitable from the standpoint of heat resistance.

Specifically, it is preferable to have a polymer blend comprising from 30 to 80% by weight of α-olefin propylene copolymer which has a melting point of 130 to 170°C, an Izod impact strength of 50 to 100 kgf·cm /cm at -30°C, a flexural modulus of 60 to 300 MPa and a melt flow rate of 0.5 to 50 g/10 minutes, and from 70 to 20% by weight of polypropylene which has long chain branching.

The aforementioned α-olefin propylene copolymer is polymerized by the so-called multistage polymerization method, and has excellent heat resistance. For example, "Catalloy" (brand name) manufactured by SunAllomer, Ltd. or the like may be used. Long-chain-branched polypropylene has a high melt tension, and exhibits satisfactory generation of cells during foaming. For example, "HMS" (brand name) manufactured by SunAllomer, Ltd. or the like may be used.

When the blending quantity of the α-olefin propylene copolymer is less than 30% by weight, the elastic modulus of the film increases, and labeling aptitude (winding function) deteriorates; when 80% by weight is exceeded, creases tend to occur in the film. When the blending quantity of long-chain-branched polypropylene is less than 20% by weight, creation of a uniform foaming condition is no longer possible; when 70% by weight is exceeded, the elastic modulus of the film increases, and winding becomes difficult.

So long as the aforementioned properties of the foamed film for shrink labels are satisfied, one may add as necessary propylene polymer and propylene α-olefin copolymer to this polypropylene polymer blend.

As a foaming agent to induce foaming of this base polymer, one may use chemical foaming agents such as azodicarbonamide, azobisbutyronitrile, and diazoaminobenzene; physical foaming agents such as carbon dioxide gas, nitrogen, propane, and dichlorodifluoromethane; and others. The dosage of the foaming agent may be suitably adjusted according to the expansion ratio.

With respect to the method for adding the chemical foaming agent, one may use the method which conducts dry blending with resin pellets, the method which conducts intermixing using a fixed-quantity feeder in the hopper of an extruder, and so on. With respect to the method for adding the physical foaming agent, there is the method which introduces the agent with pressure directly into the central zone of an extruder cylinder, the method which introduces resin pellets impregnated with the foaming agent into an extruder, and so on.

Furthermore, it is possible to appropriately blend as necessary conductive fillers and additives such as foam adjustors, nuclear agents, cross-linking agents, foaming assistants, antistatic agents, fillers, lubricants, stabilizers, ultraviolet absorbers, antioxidants, colorants, and so on.

Molding of the film 1 uses the above-described resin composition, and is conducted by the conventional extrusion molding method or extrusion blown film molding method. During this molding, foaming occurs by means of foaming agents, and a foamed sheet is obtained. Particularly with foaming which uses physical foaming agents, there is little occurrence of resin adhesion, scorching or the like in continuous production, and results are satisfactory.

Fig. 2 shows an example of a foamed shrink label of the present invention with satisfactory surface smoothness. In this drawing, reference number 3 indicates the smooth surface part, and reference number 4 indicates the foamed part. Irregularities in the surface of the smooth surface part 3 are 5 µm or less in terms of the measurement value of a surface roughness meter. When 5 µm is exceeded, the post-printing finish is rough, and finely detailed printing is not possible.

To prepare this foamed shrink film of satisfactory surface smoothness, there is: the method of single-axis stretching of a base film of which at least one side has a smooth surface, and which is obtained by the method which causes a high-temperature foamed tubular bubble continuously extruded from a die in blown film molding to contact an internal mandrel; the method which causes a heated bubble to contact a specular roll; the method which causes a bubble to contact a heated specular roll; the method which causes a high-temperature foamed tubular bubble in T-dyefilm molding to contact a specular roll; and so on.

Fig. 3 shows an example of a laminated film for foamed shrink labels of the present invention. In this drawing, reference number 1 is the previously described foamed film for shrink labels. Non-foamed films 2 and 2 are laminated and integrated on both faces of this film 1.

This non-foamed film 2 uses unstretched film with a thickness of 20 to 40 µm composed of, for example, propylene homopolymer or the like, and it is preferable to use one to which various labeling such as brand name has been affixed by printing.

Lamination of the foamed film for shrink labels 1 and non-foamed film 2 is conducted by a conventional lamination method such as the coextrusion method or dry lamination method. Printing effects are particularly enhanced when a film 2 which is printed on the back is used with the dry lamination method, and this is preferable.

The non-foamed film 2 may be provided on only one face of the film for foamed shrink labels 1, whereby it is also possible to obtain film whose surface layer has satisfactory surface smoothness, and film whose container-contact layer has poor surface smoothness and a large static friction coefficient.

In this way, laminated film of the foamed film for shrink labels 1 and non-foamed film 2 can also obtain foamed film for shrink labels with satisfactory surface smoothness when stretched.

Heat shrinkability is imparted to the foamed film 1 by stretching.

Stretching is conducted by the conventional single-axis longitudinal stretching method, in which the space between two rolls is so narrow that the film is stretched in a short interval and where stretching is conducted in the longitudinal direction (vertical direction) along the extrusion direction of the film. Temperature at the time of stretching is 100 to 120°C, and the draw ratio is 1.5 to 4.0. When the draw ratio is less than 1.5, an adequate coefficient of shrinkage is not obtained, and when it exceeds 4.0, problems such as stretch tears, pinholes and the like occur.

Using the above-described foamed film for shrink labels or laminated film for foamed shrink labels, the foamed shrink label of the present invention refer to a label in a state of attachment to the body of a container.

As the container, glass bottles, PET bottles, aluminum cans, steel cans, aluminum bottles and the like are acceptable, containers with content volumes of 350 ml, 500 ml, 1 liter (1), 2 liters (1), etc. may be used, and there are no limitations on these.

Attachment of the foamed film for shrink labels or laminated film for foamed shrink labels to the container is conducted in the following manner.

First, a long film is wound from one end around the body of the container. During this time, the stretch direction of the film is made to coincide with the winding direction. This container is already filled with its contents, but an empty container is also acceptable.

Next, the film is cut at the position where the film overlaps, and the two ends of the resulting film are joined.

This joining may be conducted by adhesion by means of rapid fixing adhesives such as heat seals, ultrasonic seals, hot-melt adhesives, ultraviolet cure adhesives, electron-beam cure adhesives.

Next, this object is introduced into a heating apparatus such as an air heating furnace, heating furnace or the like, and is heated for 30 to 90 seconds at a temperature of 130 to 180°C, and preferably 150 to 160°C, whereby the film undergoes heat shrinkage, and becomes a label which closely adheres to the container body.

As necessary, this object may further be subjected to retort treatment by heating for 30 minutes at a temperature of 121 °C.

Fig. 4 shows an example of such a labeled container, wherein reference number 11 indicates the container, and 12 indicates the label which is attached to the body thereof.

The container 11 in this example is a capped bottle made of aluminum alloy, and the label 12 exhibits satisfactory close adhesion to the container 11 from its shoulder to its bottom due to the satisfactory shrinkability of the film 1.

### EXAMPLES

Below, with respect to modes for carrying out the present invention, a more detail description is given by means of examples, but the present invention is not limited by these

### examples.

### (Examples 1 to 4 and comparative examples 1 to 5)

Resin compositions with the blended compositions shown in Table 1 were prepared, and these were made into film by the extrusion blown film molding method. During this process, the expansion ratio was varied by varying the extrusion temperature.

Furthermore, these were stretched at a temperature of 115°C by the single-axis longitudinal stretching method, in which the space between two rolls is so narrow that the film is stretched in a short interval, with variation of the draw ratio to produce foamed film for shrink labels.

With regard to the respectively obtained foamed film for shrink labels, thickness, elastic modulus, static friction coefficient, coefficient of shrinkage, expansion ratio, windability of film around the container, and external appearance after shrinkage were all evaluated. The results are shown together with Table 1.

Please note that example 4 in Table 1 is an example of laminated film for foamed shrink labels.

In Table 1,
C-PP is α-olefin propylene copolymer with a melt flow rate of 0.8 g/10 minutes, density of 0.88 g/cm³, hardness of 48 Shore D, melting point of 162°C, and flexural modulus of 150 MPa.
H-PP is long-chain-branched polypropylene with a melt flow rate of 3.0 g/10 minutes, density of 0.90 g/cm³, tensile yield strength of 350 MPa, tensile elongation of 9%, hardness of 48 Shore D, melting point of 162°C, and flexural modulus of 150 MPa.
B-PP is "SunAllomer" PB270A manufactured by SunAllomer, Ltd., which is an ethylene-propylene copolymer with improved cold resistance
R-PP is "SunAllomer" PM433M (1.0/0.900) manufactured by SunAllomer, Ltd., which is an ethylene-propylene random copolymer.

The foaming agent is azodicarbonamide.

The elastic modulus is a measurement value of JIS K-7127. The coefficient of heat shrinkage is a measurement value of JIS Z-1709 in the longitudinal direction (MD) of the film. The static friction coefficient is a measurement value of JIS K-7125. Surface smoothness is a measurement value of a surface roughness meter (JIS B-0651).
Windability is an evaluation of aptitude for high-speed winding around a metal can in a labeling apparatus which winds film around a metal can, and cuts it.

External appearance is an evaluation of the state of the finish of the product which is made after termination of heat shrinkage by the labeling apparatus.

**Table 1**

| | C-PP | H-PP | B-PP | R-PP | Foaming agent (%) | Draw ratio (times) |
|---|---|---|---|---|---|---|
| Example 1 | 60 | 40 | -- | -- | 0.5 | 1.7 |
| Example 2 | 60 | 40 | -- | -- | 0.5 | 2.3 |
| Example 3 | 40 | 40 | -- | 20 | 0.5 | 2.5 |
| Example 4 | Inner layer: 60 | 40 | -- | -- | 0.5 | 2.2 |
| | Outer layer: -- | -- | -- | 100 | | |
| | (Layer ratio of inner layer and outer layer = 3:1) | | | | | |
| Comparative example 1 | 20 | 30 | -- | 50 | 0.5 | 1.7 |
| Comparative example 2 | -- | 50 | -- | 50 | 0.5 | 1.9 |
| Comparative example 3 | -- | 30 | -- | 70 | 0.5 | 2.3 |
| Comparative example 4 | -- | -- | 85 | 15 | 0.5 | 4.0 |
| Comparative example 5 | -- | -- | 55 | 45 | 0.5 | 4.0 |

**Table 2**

| | Thickness (µm) | Elastic modulus (MPa) | Static friction coefficient | Coefficient of shinkage 90°C (%) | Coefficient of shrinkage 120°C (%) |
|---|---|---|---|---|---|
| Example 1 | 200 | 180 | 0.59 | 28 | 40 |
| Example 2 | 150 | 260 | 0.49 | 32 | 50 |
| Example 3 | 130 | 400 | 0.42 | 17 | 35 |
| Example 4 | 170 | 450 | 0.53 | 22 | 42 |
| Comparative example 1 | 200 | 550 | 0.25 | 19 | 30 |
| Comparative example 2 | 180 | 950 | 0.20 | -- | 12 |
| Comparative example 3 | 130 | 800 | 0.18 | -- | 10 |
| Comparative example 4 | 200 | 920 | 0.22 | -- | 19 |
| Comparative example 5 | 200 | 750 | 0.20 | -- | 22 |

**Table 3**

| | Expansion ratio (times) | Surface smoothness (µm) | Windability | External Appearance |
|---|---|---|---|---|
| Example 1 | 1.8 | 1.5 | Good | Good |
| Example 2 | 1.7 | 2.4 | Good | Good |
| Example 3 | 1.5 | 4.6 | Acceptable | Acceptable |
| Example 4 | 1.5 | 0.54 | Good | Good |
| Comparative example 1 | 1.7 | 5.2 | Defective | Somewhat defective |
| Comparative example 2 | 1.5 | 7.0 | Defective | Defective |
| Comparative example 3 | 1.7 | 7.8 | Defective | Defective |
| Comparative example 4 | 1.6 | 8.6 | Defective | Defective |
| Comparative example 5 | 1.7 | 7.3 | Defective | Defective |

From the results of Table 1, it is clear that the foamed film for shrink labels of the present invention has satisfactory windability vis-à-vis the container, that the condition of its post-heat shrinkage finish is also good, and that it is suited to the aforementioned new continuous attachment system for shrink labels.

### INDUSTRIAL APPLICABILITY

As the foamed film for shrink labels of the present invention can be easily bent, and as appropriate friction is produced between it and a container, it can be easily wound around the body of a container. By this means, it can be accommodated by the new continuous attachment system for shrink labels. Moreover, the heat resistance of the film is satisfactory, and retort treatment after attachment of the shrink label to the container is also possible. Furthermore, as it uniformly and closely adheres to containers of complex external shape, there is no need to select container shape, with the result that it is extremely useful in industrial terms.

## Claims

1. A foamed film for shrink labels produced by stretching in the longitudinal direction; having a tensile elastic modulus of 80 to 500 MPa, and a static friction coefficient of 0.3 to 0.8.

2. The foamed film for shrink labels according to claim 1, further having a thickness of 80 to 300 µm, and a coefficient of shrinkage of 15% or more at 90°C and 30% or more at 120°C.

3. The foamed film for shrink labels according to claim 2, comprising a resin composition comprising:
from 30 to 80% by weight of α-olefin propylene copolymer which has a melting point of 130 to 170°C, an Izod impact strength of 50 to 100 kgf·cm/cm at -30°C, a flexural modulus of 60 to 300 MPa, and a melt flow rate of 0.5 to 50 g/10 minutes; and
from 70 to 20% by weight of polypropylene which has long chain branching.

4. The foamed film for shrink labels according to any of the claims 1 to 3, wherein a surface smoothness of, at least, a surface layer is 5 µm or less.

5. A laminated foamed film for shrink labels produced by laminating non-foamed film on at least one face of the foamed film for shrink labels according to any of the claims 1 to 3.

6. A method of preparing a foamed film for shrink labels, wherein a blown film with a thickness of 180 to 800 µm and an expansion ratio of 1.3 to 5 is stretched by the single-axis longitudinal stretching method, in which the space between two rolls is so narrow that the film is stretched in a short interval, to become a draw ratio of 1.5 to 4.0 at 100 to 125°C.

7. A method of preparing a foamed film for shrink labels, wherein a blown film, which has a thickness of 180 to 800 µm and an expansion ratio of 1.3 to 5.0 and at least one face of which is laminated with non-foamed film, is stretched by the single-axis longitudinal stretching method, in which the space between two rolls is so narrow that the film is stretched in a short interval, so that a draw ratio is 1.5 to 4.0 at 100 to 125°C, and wherein a surface smoothness of the one face is 5 µm or less.

8. A method of preparing a foamed film for shrink labels, wherein a base film, which has a thickness of 180 to 800 µm and an expansion ratio of 1.3 to 5.0 and at least one face of which has a surface smoothness of 5 µm or less, is stretched by the single-axis longitudinal stretching method, in which the space between two rolls is so narrow that the film is stretched in a short interval, so that a draw ratio is 1.5 to 4.0 at 100-125°C, and wherein a surface smoothness of the surface layer is 5 µm or less.

9. The method of preparing of foamed film for shrink labels according to claim 8, wherein the base film is a blown film in which a high-temperature foamed tubular bubble continuously extruded from a die is made to contact an internal mandrel.

10. A foamed shrink label produced by winding the foamed film for shrink labels according to any of the claims 1 to 3 around a container, and heating it.

11. A foamed shrink label produced by winding the foamed film for shrink labels according to claim 4 around a container, and heating it.

12. A foamed shrink label produced by winding the laminated foamed film for shrink labels according to claim 5 around a container, and heating it.

13. A labeled container to which a foamed shrink label is affixed by winding the foamed film for shrink labels according to any of the claims 1 to 3 around a container, and heating it.

14. A labeled container to which a foamed shrink label is affixed by winding the foamed film for shrink labels according to claim 4 around a container, and heating it.

15. A labeled container to which a foamed shrink label is affixed by winding the laminated foamed film for shrink labels according to claim 5 around a container, and heating it.
